# EUROPEAN PATENT APPLICATION

(11) **EP 4 738 849 A1**
(43) Date of publication of application: **06.05.2026**
(21) Application number: 25211917.7
(22) Date of filing: 29.10.2025
(51) Int. Cl.: H04N 21/442

(54) **METHODS AND SYSTEMS FOR DETECTING STREAMING SOURCES USING SCREEN CAPTURE AND LOGO DETECTION**

(30) Priority: 01.11.2024 US 202418934330
(71) Applicant: The Nielsen Company (US), LLC, New York, NY 10010 (US)
(72) Inventor: Finc, Matjaz, New York, NY 10010 (US); Lekah, Alan, New York, NY 10010 (US); Berrada, Meryem, New York, NY 10010 (US); Lerch, Ronny, New York, NY 10010 (US); Sotosek, Igor, New York, NY 10010 (US); Stavropoulos, John, New York, NY 10010 (US); Anderson, James, New York, NY 10010 (US)
(74) Representative: Chettle, John Edward

(57) **Abstract**

In one example, a method is described. The method includes receiving a wireless signal from a remote control device; determining that the wireless signal comprises a command sent from the remote control device to a media presentation device, where the media presentation device is configured to provide streaming media to a media output device for presentation in a monitored environment, and where the computing device, the remote control device, the media presentation device, and the media output device are located within the monitored environment; based on the determination that the wireless signal comprises the command sent from the remote control device to the media presentation device, controlling the media output device to capture an image of the streaming media and transmit the image to the computing device; and based on the image, determining source information identifying a streaming service provider as a source of the streaming media.

## Description

### USAGE AND TERMINOLOGY

In this disclosure, unless otherwise specified and/or unless the particular context clearly dictates otherwise, the terms "a" or "an" mean at least one, and the term "the" means the at least one.

### SUMMARY

In one aspect, a non-transitory computer-readable storage medium, having stored thereon program instructions that, upon execution by a processor of a computing device, cause performance of operations is described. The operations include receiving a wireless signal from a remote control device. The operations also include determining that the wireless signal comprises a command sent from the remote control device to a media presentation device, where the media presentation device is configured to provide streaming media to a media output device for presentation in a monitored environment, and where the computing device, the remote control device, the media presentation device, and the media output device are located within the monitored environment. The operations also include based on the determination that the wireless signal comprises the command sent from the remote control device to the media presentation device, controlling the media output device to capture an image of the streaming media presented by the media output device and transmit the image to the computing device. The operations also include based on the image, determining source information that identifies a streaming service provider as a source of the streaming media.

In another aspect, a method performed by a computing device comprising a processor and memory is described. The method includes receiving a wireless signal from a remote control device. The method also includes determining that the wireless signal comprises a command sent from the remote control device to a media presentation device, where the media presentation device is configured to provide streaming media to a media output device for presentation in a monitored environment, and where the computing device, the remote control device, the media presentation device, and the media output device are located within the monitored environment. The method also includes based on the determination that the wireless signal comprises the command sent from the remote control device to the media presentation device, controlling the media output device to capture an image of the streaming media presented by the media output device and transmit the image to the computing device. The method also includes based on the image, determining source information identifying a streaming service provider as a source of the streaming media.

In another aspect, a computing device is described. The computing device includes a processor and memory having stored thereon program instructions that, when executed by the processor, cause performance of operations. The operations include receiving a wireless signal from a remote control device. The operations also include determining that the wireless signal comprises a command sent from the remote control device to a media presentation device, where the media presentation device is configured to provide streaming media to a media output device for presentation in a monitored environment, and where the computing device, the remote control device, the media presentation device, and the media output device are located within the monitored environment. The operations also include based on the determination that the wireless signal comprises the command sent from the remote control device to the media presentation device, controlling the media output device to capture an image of the streaming media presented by the media output device and transmit the image to the computing device. The operations also include based on the image, determining source information identifying a streaming service provider as a source of the streaming media.

In another aspect, a non-transitory computer-readable storage medium, having stored thereon program instructions that, upon execution by a processor of a computing device, cause performance of operations is described. The operations include receiving a wireless signal from a remote control device. The operations also include determining that the wireless signal comprises a command sent from the remote control device to a media presentation device, where the media presentation device is configured to provide streaming media to a media output device for presentation in a monitored environment, where the computing device comprises a capture card that has a wired connection with the media output device, and where the computing device, the remote control device, the media presentation device, and the media output device are separate devices located within the monitored environment. The operations also include based on the determination that the wireless signal comprises the command sent from the remote control device to the media presentation device, controlling the capture card to capture an image of the streaming media presented by the media output device. The operations also include based on the image, determining source information identifying a streaming service provider as a source of the streaming media.

In another aspect, a method performed by a computing device comprising a processor and memory is described. The method includes receiving a wireless signal from a remote control device. The method also includes determining that the wireless signal comprises a command sent from the remote control device to a media presentation device, where the media presentation device is configured to provide streaming media to a media output device for presentation in a monitored environment, where the computing device comprises a capture card that has a wired connection with the media output device, and where the computing device, the remote control device, the media presentation device, and the media output device are separate devices located within the monitored environment. The method also includes based on the determination that the wireless signal comprises the command sent from the remote control device to the media presentation device, controlling the capture card to capture an image of the streaming media presented by the media output device. The method also includes based on the image, determining source information identifying a streaming service provider as a source of the streaming media.

In another aspect, a computing device is described. The computing system includes a processor and memory having stored thereon program instructions that, when executed by the processor, cause performance of operations. The operations include receiving a wireless signal from a remote control device. The operations also include determining that the wireless signal comprises a command sent from the remote control device to a media presentation device, where the media presentation device is configured to provide streaming media to a media output device for presentation in a monitored environment, where the computing device comprises a capture card that has a wired connection with the media output device, and where the computing device, the remote control device, the media presentation device, and the media output device are separate devices located within the monitored environment. The operations also include based on the determination that the wireless signal comprises the command sent from the remote control device to the media presentation device, controlling the capture card to capture an image of the streaming media presented by the media output device. The operations also include based on the image, determining source information identifying a streaming service provider as a source of the streaming media.

In another aspect, a non-transitory computer-readable storage medium, having stored thereon program instructions that, upon execution by a processor of a computing device, cause performance of operations is described. The operations include receiving a wireless signal from a remote control device. The operations also include determining that the wireless signal comprises a command sent from the remote control device to a media presentation device, where the media presentation device is configured to provide streaming media to a media output device for presentation in a monitored environment, where a camera is connected to the computing device, and where the computing device, the remote control device, the media presentation device, the media output device, and the camera are separate devices located within the monitored environment. The operations also include based on the determination that the wireless signal comprises the command sent from the remote control device to the media presentation device, controlling the camera to capture an image of the streaming media presented by the media output device and transmit the image to the computing device. The operations also include based on the image, determining source information that identifies a streaming service provider as a source of the streaming media.

In another aspect, a method performed by a computing device comprising a processor and memory is described. The method includes receiving a wireless signal from a remote control device. The method also includes determining that the wireless signal comprises a command sent from the remote control device to a media presentation device, where the media presentation device is configured to provide streaming media to a media output device for presentation in a monitored environment, where a camera is connected to the computing device, and where the computing device, the remote control device, the media presentation device, the media output device, and the camera are separate devices located within the monitored environment. The method also includes based on the determination that the wireless signal comprises the command sent from the remote control device to the media presentation device, controlling the camera to capture an image of the streaming media presented by the media output device and transmit the image to the computing device. The method also includes based on the image, determining source information that identifies a streaming service provider as a source of the streaming media.

In another aspect, a computing device is described. The computing system includes a processor and memory having stored thereon program instructions that, when executed by the processor, cause performance of operations. The operations include receiving a wireless signal from a remote control device. The operations also include determining that the wireless signal comprises a command sent from the remote control device to a media presentation device, where the media presentation device is configured to provide streaming media to a media output device for presentation in a monitored environment, where a camera is connected to the computing device, and where the computing device, the remote control device, the media presentation device, the media output device, and the camera are separate devices located within the monitored environment. The operations also include based on the determination that the wireless signal comprises the command sent from the remote control device to the media presentation device, controlling the camera to capture an image of the streaming media presented by the media output device and transmit the image to the computing device. The operations also include based on the image, determining source information that identifies a streaming service provider as a source of the streaming media.

### BRIEF DESCRIPTION OF THE DRAWINGS

Figure 1 is a simplified block diagram of an example audience measurement computing system in which various described operations can be implemented.
Figure 2 is a simplified block diagram of an alternative example audience measurement computing system in which various described operations can be implemented.
Figure 3 is a simplified block diagram of an alternative example audience measurement computing system in which various described operations can be implemented.
Figure 4 is an example image captured from streaming media presented by a media output device.
Figure 5 is another example image captured from streaming media presented by a media output device.
Figure 6 is another example image captured from streaming media presented by a media output device.
Figure 7 is a flow chart of an example method.
Figure 8 is a flow chart of another example method.
Figure 9 is a flow chart of another example method.
Figure 10 is a simplified block diagram of an example computing device.

### DETAILED DESCRIPTION

### I. Overview

To measure audience exposure to media (e.g., audio and/or video), an audience measurement entity (AME) collects media exposure data from monitored environments, such as a household including one or more audience members who are panelists of the AME. The collected data can characterize who is consuming media (e.g., how many people, and which demographics) and what type of media is being consumed (e.g., movies, television program episodes, advertisements, and/or Internet video clips). The collected data can include data that identifies the media (e.g., metadata, codes, signatures, and/or watermarks), data that identifies the audience members (e.g., anonymized demographic information, usernames, and/or email addresses) and, in some cases, data that identifies the means by which the media was presented to the audience members (e.g., an identifier of a streaming application and/or a time/duration of use of the streaming application). The AME can also provide this collected data to other entities, such as advertisers to improve the effectiveness of their advertising campaigns, streaming service providers (e.g., Netflix^{®} or Hulu^{®}) to gain a deeper insight into streaming activity, or broadcasters to gain a deeper insight into channel viewership.

Regarding streaming media in particular, it can be useful for the AME to determine which streaming service providers (and corresponding streaming applications) are the sources of streaming media activity in monitored environments. Streaming media, as referred to herein, includes media that is streamed via the Internet to devices that are connected (e.g., via Wi-Fi or Ethernet) to a local area network of a monitored environment. Such devices can include connected televisions (CTVs) (e.g., smart TVs), desktop computers, laptop computers, tablets, and mobile phones. In some monitored environments, the AME uses a streaming meter to collect at least some of the aforementioned media exposure data with respect to streaming media, including source information. To facilitate this, for example, the streaming meter can take the form of a device, separate from a modem or router on the local area network, that is coupled to the local area network and monitors network traffic to collect media exposure data for streaming media presented in the monitored environment. The data collected by the streaming meter can include source information that identifies which streaming service provider, and thus which streaming application, is the source of the streaming media.

One manner in which streaming media can be accessed in a monitored environment is via a media presentation device such as a set-top box. For instance, the media presentation device can be configured with software associated with various streaming service providers. As such, the media presentation device can access streaming media via the Internet and provide the streaming media to a media output device (e.g., a television) for presentation. In some cases, the media presentation device is configured to receive signals for the streaming media over a coaxial cable (e.g., a coaxial cable connected between the media presentation device and a wall of a room in the monitored environment).

While existing streaming meters can detect a source of the streaming media for devices that are connected to the local area network of the monitored environment and that access the streaming media via the Internet through that local area network connection, such meters might not be able to monitor streaming activity and detect the streaming source for media presentation devices that access streaming media in ways other than a connection to the local area network, such as via a coaxial cable.

The present disclosure provides methods and systems for detecting streaming sources using screen capture technology and logo detection technology. As described herein, the disclosed methods and systems provide a way to detect streaming sources for media presentation devices that are accessing streaming media via a coaxial cable, as well as for devices that access streaming media via Wi-Fi or Ethernet connections.

In particular, a computing device can detect a wireless signal transmitted from a remote control device for the media presentation device (e.g., a set-top box remote) to the media presentation device, specifically a signal that includes a command for controlling the media presentation device. Detection of such a signal can trigger the computing device to cause an image displayed by the media output device (e.g., a television) to be captured. The computing device can then process the image to determine source information that identifies a streaming source provider as a source of the streaming media that the media output device is presenting. For instance, the computing device can use an image recognition model to detect a logo for the streaming source provider in the image. As will be described, the computing device can also be configured to analyze the image (e.g., using an optical character recognition model) to identify the streaming media itself in addition to the streaming source provider of the streaming media.

The computing device can cause the image to be captured in various ways. For example, the media output device itself can be configured to capture displayed images. In such an example, the computing device can be wirelessly paired with the media output device and, upon detecting the signal, the computing device can send instructions to the media output device to capture the image and send the captured image back to the computing device. As another example, the computing device can include a capture card and the capture card can have a wired connection (e.g., HDMI) to the media output device. Upon detecting the signal, the computing device can control the capture card to capture the image. As yet another example, the computing device can control a camera to capture the image. The camera can be connected to the computing device and can be mounted at a location within the monitored environment that faces the media output device, such as on top of the media output device and angled towards the screen or at a different location within the monitored environment.

### II. System Architecture

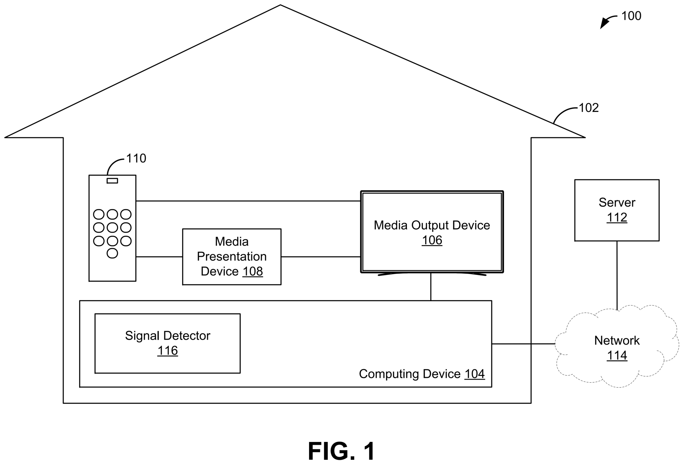

Figure 1 is a simplified block diagram of an example audience measurement computing system 100 in which various described operations can be implemented relative to a monitored environment 102. The monitored environment 102 can be a household including one or more audience members, or a particular room in such a household, for example. The audience measurement computing system 100 includes a computing device 104, a media output device 106, a media presentation device 108, and a remote control device 110, which are separate devices located within the monitored environment 102. The audience measurement computing system 100 also includes a server 112 located remotely from the monitored environment 102. In the implementation of Figure 1, the computing device 104 controls the media output device 106 to capture an image of the streaming media that the media output device 106 presents and to transmit the image to the computing device 104.

The lines shown connecting the aforementioned components of the audience measurement computing system 100 represent communication links, each of which can take the form of any wired or wireless communication interface, such as an Ethernet interface, HDMI interface, cellular interface, Wi-Fi interface, or Bluetooth^{®} interface. For example, the computing device 104 can have a wireless connection with the media output device 106 and can be configured to communicate with the server 112 over a network 114 (e.g., a cloud network, or the Internet) in accordance with one or more communication protocols. In addition, the remote control device 110 can have a wireless connection with the media presentation device 108 and the media output device 106, and the media presentation device 108 can have a wired connection with the media output device 106. In other examples, the media presentation device 108 has a wireless connection (e.g., wireless transmission systems for HDMI) with the media output device 106. Other examples are possible as well.

As further shown in Figure 1, the computing device 104 includes a signal detector 116 that is configured to detect wireless signals transmitted from the remote control device 110 to the media presentation device 108. In some examples, the signal detector 116 can be configured to detect wireless signals transmitted from the remote control device 110 to the media output device 106 as well. To facilitate signal detection in connection with the present disclosure, the signal detector 116 can include an antenna for receiving radio frequency signals, infrared signals, or other types of signals and can also include software that is executed to cause the signal detector 116 to sniff (e.g., capture and access) data packets in the signals. The software of the signal detector 116 and/or the computing device 104 can then process the data packets in the signals to determine information about the signals. Although the signal detector 116 is shown as part of the computing device 104, the signal detector 116 can alternatively be a physically separate device that is connected to the computing device 104, such as via a USB connection.

The computing device 104 includes one or more processors and data storage and can take the form of a streaming meter of an AME, a people meter of an AME (e.g., an audience measurement meter device having a set of inputs each assigned to a corresponding audience member of a household for that member to indicate they are present in the monitored environment 102 and viewing media), a laptop computer, a desktop computer, or another type of computing device. In some examples, the computing device 104 can be an attention meter of an AME that is configured to perform the operations described herein and also configured to perform operations related to determining attention of audience members in the monitored environment 102, such as by performing machine vision processing on images captured by a camera mounted on or near the media output device 106 in order to recognize audience members in the images and determine whether those audience members are looking at or away from the media output device 106. Within the monitored environment 102, the computing device 104 can be located near (e.g., beside or below) the media output device 106, for instance, and can be connected to the local area network of the monitored environment 102 via Wi-Fi or Ethernet.

The media output device 106 can take the form of any device configured to output media for presentation, such as a television, computer monitor, smartphone, tablet computer, or laptop computer, among other possibilities. For the sake of example, the media output device 106 in Figure 1, Figure 2, and Figure 3 is depicted as a television. For the implementation in which the computing device 104 controls the media output device 106 to capture an image of the streaming media, the media output device 106 can be configured with the functionality (e.g., as part of its operating system software) to enable the media output device 106 to receive instructions that, upon receipt, cause the media output device 106 to capture images of what is being displayed on a screen of the media output device 106. In other implementations and scenarios, however, the media output device 106 might not have the functionality to capture such images. Within the monitored environment 102, the media output device 106 can be connected to the local area network of the monitored environment 102 via Wi-Fi or Ethernet.

The media presentation device 108 can take the form of a device configured to access streaming media via the Internet and provide the streaming media to the media output device 106 for presentation. To facilitate this, the media presentation device 108 can include software associated with various streaming service providers, such as a Netflix^{®} application or Hulu^{®} application, through which the media presentation device 108 accesses streaming media that the streaming service providers provide. As an example, the media presentation device 108 can be or include a set-top box. In some cases, as noted above, the media presentation device 108 can be configured to access the streaming media via a coaxial cable. Additionally or alternatively, the media presentation device 108 can be configured to connect to a local area network of the monitored environment 102 via Ethernet or Wi-Fi for Internet access.

The remote control device 110 can be a remote controller configured to transmit wireless signals, such as radio frequency signals or infrared signals, that include commands for controlling operation of the media presentation device 108, and perhaps additionally the media output device 106 and/or other media presentation devices in the monitored environment 102.

The server 112 can be a computing device or system of computing devices that perform operations related to audience measurement. For example, the server 112 can be owned and operated by an AME. The server 112 can be configured to communicate with the computing device 104 to receive data from the computing device 104 (as well as other computing devices in the monitored environment 102, such as an audience measurement meter) and use that data to identify the media that is being viewed by audience members of the monitored environment 102 and which audience members are viewing the media. As a specific example, the computing device 104 can transmit, to the server 112, data identifying the streaming source provider of streaming media being presented in the monitored environment 102. The server 112 can then store that data in association with other data, such as demographic data for the audience members of the monitored environment 102 and/or data received from a people meter in the monitored environment 102 that identifies which audience members are viewing the streaming media. Other examples are possible as well.

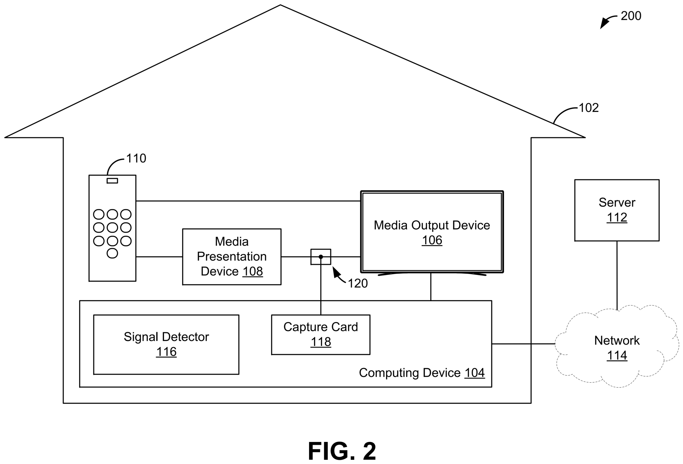

Figure 2 is a simplified block diagram of an alternative example audience measurement computing system 200 in which various described operations can be implemented relative to the monitored environment 102. In particular, Figure 2 depicts an implementation in which a capture card 118, separate from the media output device 106, can be used to capture images of streaming media presented by the media output device 106. This implementation can be useful, for instance, in a scenario where the media output device 106 is not configured to capture such images on its own.

To facilitate this, the computing device 104 is shown to include a capture card 118 that has a wired connection with the media output device 106. In some examples, the wired connection can be an HDMI connection. More particularly, the media presentation device 108 and the capture card 118 can each have a wired connection with a splitter device 120, which in turn has a wired connection with the media output device 106. Thus, the capture card 118 can receive video signals representing the streaming media that are transmitted from the media presentation device 108 to the media output device 106 and convert the video signals into digital images. The computing device 104 can then process the images to identify the streaming source provider of the streaming media.

Although the capture card 118 is shown as part of the computing device 104, the capture card 118 can alternatively be a physically separate device that is connected to an input port of the computing device 104, such as a USB port.

The lines shown connecting the aforementioned components of the alternative example audience measurement computing system 200 represent communication links, each of which can take the form of any wired or wireless communication interface, such as an Ethernet interface, cellular interface, Wi-Fi interface, or Bluetooth^{®} interface.

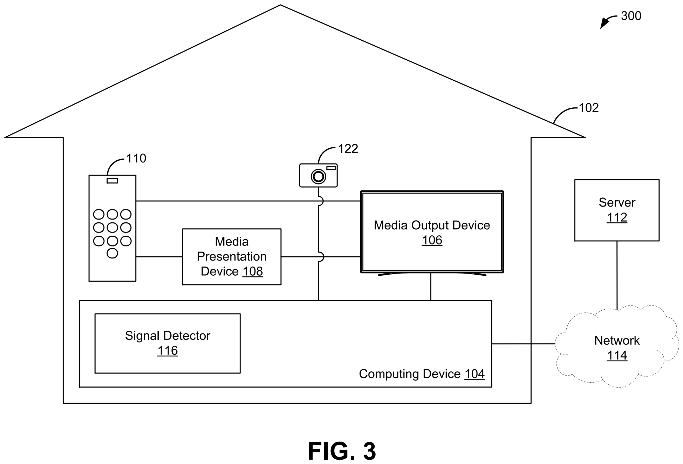

Figure 3 is a simplified block diagram of an alternative example audience measurement computing system 300 in which various described operations can be implemented relative to the monitored environment 102. In particular, Figure 3 depicts an implementation in which a camera 122 can be used to capture images of streaming media presented by the media output device 106. This implementation can be useful, for instance, in a scenario where the media output device 106 is not configured to capture such images on its own.

The camera 122 can be configured to capture images of streaming media presented by the media output device 106 in response to a trigger condition such as a command received from the computing device 104. Alternatively, the camera 122 can be configured to capture images of streaming media presented by the media output device 106 without receiving a command from another device, such as in response to the camera 122 detecting that the media output device 106 has turned on, in response to the camera 122 detecting that the image displayed on the screen has changed, in response to the camera 122 detecting a certain type of wireless signal sent from the remote control device 110 to the media presentation device 108 and/or to the media output device 110, at a predefined frequency, and/or over a predefined period of time. Other examples are possible as well.

The camera 122 can be located (e.g., mounted) at various locations within the monitored environment 102 where the camera 122 can face a display screen of the media output device 106, such as on top of the media output device 106 and angled downward to face the screen, or in front of the media output device 106 (e.g., on top of a piece of furniture or mounted on a ceiling or wall).

Although the camera 122 is shown within the monitored environment 102 as a separate device from the media output device 106, the media presentation device 108, the computing device 104, and the remote control device 110, the camera 122 can be integrated with any one of those devices.

The lines shown connecting the aforementioned components of the alternative example audience measurement computing system 300 represent communication links, each of which can take the form of any wired or wireless communication interface, such as an Ethernet interface, cellular interface, Wi-Fi interface, or Bluetooth^{®} interface

Although the systems described above with respect to Figure 1, Figure 2, and Figure 3 are noted as alternative systems, there can be implementations having a single audience measurement computing system that is configured to capture images in any two or more of the manners discussed above and as discussed further below.

### III. Example Operations

The computing device 104 and/or components thereof can be configured to perform and/or can perform one or more operations. Examples of these operations and related features will now be described.

To control when the computing device 104 triggers capture of images of the streaming media - either by way of controlling the media output device 106 to capture the images or controlling the capture card 118 to capture the images - the computing device 104 can use wireless signals transmitted by the remote control device 110 to the media presentation device 108. This can be useful because commands sent form the remote control device 110 to the media presentation device 108 might correspond to actions associated with the viewing of streaming media, specifically actions that might cause a logo or information to be displayed by the media output device 106 that can be analyzed in an image to identify the streaming service provider of the streaming media, and perhaps additionally to identify the streaming media itself (e.g., a program name, an episode title, an advertiser name). Examples of such actions include opening a software application (e.g., a streaming media provider's application, such as a Netflix^{®} application), navigating a menu within the application, initiating playback of the streaming media, and pausing playback of the streaming media.

As such, the computing device 104 can receive a wireless signal from the remote control device 110 and determine that the wireless signal includes a command sent from the remote control device 110 to the media presentation device 108. As described above, the computing device 104 can receive the wireless signal via the signal detector 116 (e.g., via the antenna of the signal detector 116). As an example, the wireless signal can be a radio frequency signal, such as a signal transmitted over a Bluetooth^{®} connection between the remote control device 110 and the media presentation device 108.

Using the signal detector 116, the computing device 104 can capture and analyze data packets in the wireless signal to determine information about the wireless signal, such as the device to which the wireless signal is being sent and the command that is being sent to that device. In some examples, the computing device 104 can detect a code within the wireless signal and compare that code to at least one of a plurality of predefined codes, each of which corresponds to a respective one of a plurality of media presentation devices. For example, a particular media presentation device provider (e.g., Comcast^{®}) of a media presentation device such as a set-top box can include a specific hexadecimal code in commands transmitted from that media presentation device's remote control device to the media presentation device. Additionally or alternatively, a particular model of a media presentation device might have its own specific hexadecimal code used in commands to that media presentation device. In either case, the computing device 104 can store a list of predefined codes corresponding to different media presentation device models and/or providers.

The computing device 104 can determine that the code detected within the wireless signal matches one of the predefined codes, specifically a code corresponding to the media presentation device 108. Based on that determination, the computing device 104 can determine that the wireless signal includes a command sent from the remote control device 110 to the media presentation device 108. In practice, the command itself may be encrypted, but the computing device 104 is still able to determine from the matching code that the wireless signal includes a command sent from the remote control device 110 and intended for the media presentation device 108.

In a similar manner, the computing device 104 can also use the signal detector 116 to detect wireless signals transmitted from the remote control device 110 to the media output device 106 and recognize codes corresponding to commands such as volume or channel changes. The computing device 104 can then use those signals to trigger the capture of images of the streaming media. Alternatively, the computing device 104 can be configured to ignore those signals based on the determination that the signals are intended for the media output device 106. As such, the computing device 104 can distinguish commands intended for the media presentation device 108 from commands intended for the media output device 106.

In other examples, the media output device 106 and/or the media presentation device 108 can be configured to receive the wireless signal and determine that the wireless signal includes the command and then transmit a notification of that determination (e.g., including the command itself) to the computing device 104. As such, the act of the computing device 104 determining that the wireless signal includes the command can involve receiving the notification from the media output device 106 and/or the media presentation device 108.

Based on the determination that the wireless signal includes the command sent from the remote control device 110 to the media presentation device 108, the computing device 104 can trigger capture of an image of the streaming media presented by the media output device 106.

As indicated above, in some implementations, triggering capture of the image can involve the computing device 104 triggering the image capture by controlling the media output device 106 to capture the image of the streaming media and transmit the image to the computing device 104. To control the media output device 106 in this way, the computing device 104 can pair itself with the media output device 106 and control the media output device 106 accordingly based on the pairing. For example, an application programming interface (API) of the media output device 106 can include functionality for pairing devices with the media output device 106. As such, the computing device 104 can issue a pairing request to the media output device 106 using the API and the media output device 106 can return a pairing state indicator indicating that the pairing process was successful. In some cases, the pairing might only be successful if both the computing device 104 and the media output device 106 are on the same network (i.e., the local area network of the monitored environment 102).

Once paired with the media output device 106, the computing device 104 can wirelessly transmit (e.g., via Wi-Fi or Bluetooth^{®}) a command that, upon receipt by the media output device 106, causes the media output device 106 to capture the image of the streaming media presented by the media output device 106 and transmit the image to the computing device 104. As discussed above, to facilitate this for instance, the media output device 106 can have functionality as part of its operating system that enables the media output device 106 to receive instructions that, upon receipt, cause the media output device 106 to capture images of what is being displayed on a screen of the media output device 106.

As further indicated above, there can be situations in which the media output device 106 does not include a capture card or software with the equivalent functionality, or situations in which having the media output device 106 itself perform the capturing is undesirable. Accordingly, in some implementations, triggering capture of the image can involve the computing device 104 using a capture card of its own - either integrated within the computing device 104 or separate from, but connected to an input port of, the computing device 104 - to capture the image, such as capture card 118 shown in Figure 2. In such implementations, the capture card 118 can have a wired connection with the media output device 106, such as an HDMI connection. In such implementations, the computing device 104 can control the capture card 118 to capture the image of the streaming media presented by the media output device 106. As discussed above, the capture card 118 can capture the image because it also has a wired connection (e.g., the HDMI connection) with the media presentation device 108 that is sending the video signals, such as via the splitter device 120 shown in Figure 2. In other words, the media presentation device 108 can be connected to the media output device 106 and the capture card 118 via the splitter device 120.

In yet further implementations, as indicated above, triggering capture of the image can involve the computing device 104 triggering the image capture by controlling a camera, such as camera 122 shown in Figure 3, to capture the image of the streaming media and transmit the image to the computing device 104. To control the camera 122 in this way, the computing device 104 can transmit a command to the camera 122 over a wired or wireless connection with the camera 122 that, upon receipt by the camera, causes the camera 122 to capture the image of the streaming media presented by the media output device 106 and transmit the image to the computing device 104.

The camera 122 can be located in any of the locations described above with respect to Figure 3, or at a different location. In some alternative implementations, the camera 122 can be configured to capture the image on its own, as described above, and transmit the image to the computing device 104. The camera 122 can be configured with hardware and/or software to perform one or more of the operations described herein as being performed by the computing device 106.

Based on the image captured by the capture card 118 of the computing device 104 or received by the computing device 104 from the media output device 106 or the camera 122, the computing device 104 can determine source information identifying a streaming service provider as a source of the streaming media. The source information can include, for instance, a name, identification number, and/or other identifier for the streaming service provider. In some cases, the source information can additionally or alternatively include a name, identification number, and/or other identifier for a program, episode, or advertisement included in the streaming media.

In some implementations, determining the source information can involve detecting, within the image, a logo of the streaming service provider, a user interface layout of the streaming service provider, and/or another identifying feature attributable to the streaming service provider. More particularly, to facilitate this, the computing device 104 can run a logo detection model or other type of image or text recognition model that is trained to analyze an image and detect, within the image, the logo, the user interface layout, or the other identifying feature.

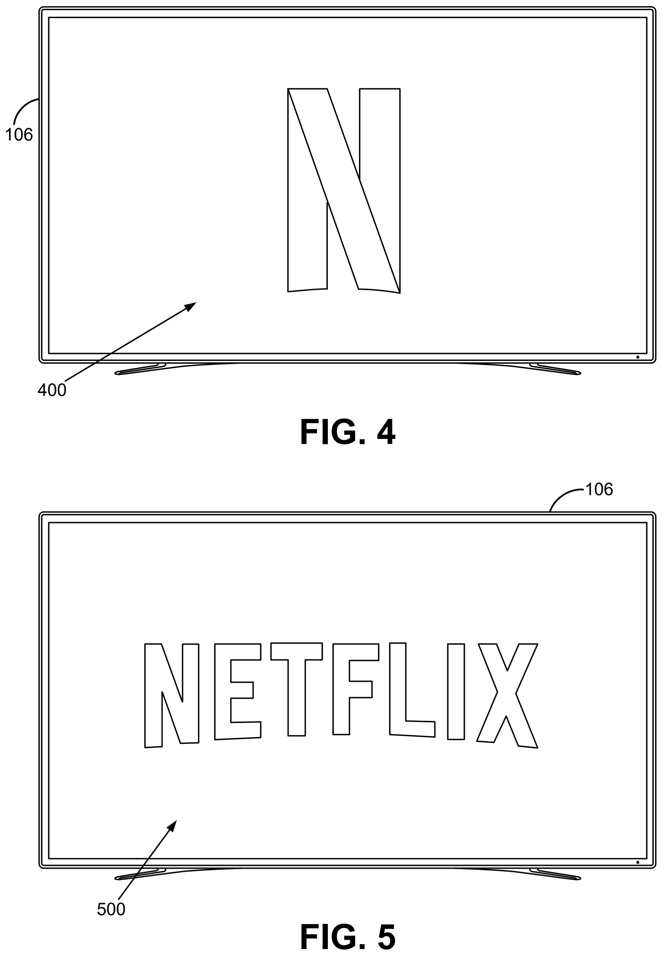

Using Netflix^{®} as an example, the logo detection model can be configured to recognize the "N" logo and/or the Netflix^{®} name logo. Figure 4 is an example image 400 captured from streaming media presented by the media output device 106, specifically an image that includes the "N" logo. And Figure 5 is another example image 500 captured from streaming media presented by the media output device 106 that includes the Netflix^{®} name logo.

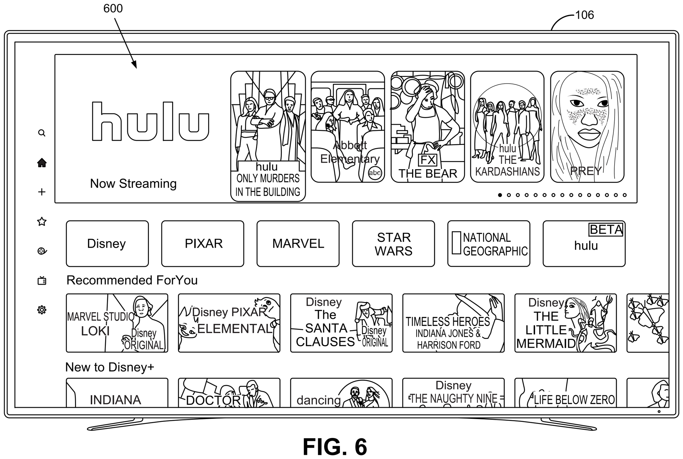

Figure 6 is another example image 600 captured from streaming media presented by the media output device 106. In particular, the image 600 of Figure 6 depicts a menu screen for a Hulu^{®} application. A recognition model of the computing device 104 can be configured to recognize, for instance, the Hulu^{®} logo in the top left corner of the image 600 and/or might recognize the user interface layout for the Hulu^{®} menu. To facilitate the latter, the recognition model can be trained on various user interface layout templates, such as a main menu screen, a search menu screen, a screen that appears once a user has selected a program to watch, but before initiating playback of the program, and/or a user interface for when the user pauses a program. Each such template can specify where certain icons or selectable user interface elements appear (e.g., play button, timestamps, subtitle selection), and can correspond to different streaming service provider applications and/or versions of those applications (e.g., device-specific or operating system-specific versions of those applications).

Furthermore, the computing device 104 can, in some examples, include a recognition model that is trained to recognize and identify the specific program, episode, advertisement, etc., that is being viewed. For instance, such a model can recognize text on a pause menu screen that indicates the name of the program. Other examples are possible as well.

Once the image has been captured and the source information has been determined, the computing device 104 can transmit the source information over the network 114 to the server 112. The server 112 can be an AME server that collects, stores, and generates reports on data from numerous (e.g., thousands, or tens or hundreds of thousands) monitored environments, including but not limited to data identifying source information of streaming service providers. In some cases, the server 112 can store the source information in association with demographics of audience members of the monitored environment 102 and generate a report, such as a report that indicates which streaming service providers and associated applications are being watched by which demographics. Other examples of data stored and reports generated are possible as well.

In some implementations, the determination that the wireless signal includes a command sent from the remote control device 110 to the media presentation device 108 can trigger the computing device 104 to cause images to be captured in one or more of the ways described above for a predefined period of time and at a predefined frequency. For instance, once the determination is made, the computing device 104 can be configured to cause images to be captured every one or two seconds for the next fifteen seconds. Other example periods of time and frequencies are possible as well. As a general matter, it can be desirable in some scenarios to limit how often the images are being captured to limit how many computing resources are being used (e.g., by the computing device 104 and/or by the media output device 106).

Although systems described herein are primarily described as including a media presentation device connected to a media output device, the disclosed operations can also be implemented in other systems, such as systems in which, instead of a media presentation device accessing the streaming media, the media output device 106 itself (e.g., a smart TV, desktop computer, or laptop computer that is configured to run streaming applications) is both accessing the streaming media and presenting the streaming media. As a specific example, the media output device 106 can be a smart TV with a Netflix^{®} application, and the remote control device 110 can be a remote control device for the smart TV. The computing device 104 can determine that a wireless signal includes a command sent from the remote control device 110 to the smart TV and responsively control the media output device 106 to capture an image and/or control the capture card to capture the image. Other examples are possible as well.

In some alternative implementations, the computing device 104 can control the capture card or control the media output device 106 to capture images (at a predefined frequency and for a predefined period) without using wireless signals from the remote control device 110 as a trigger condition. This can be useful, for instance, in a scenario in which a higher frequency at which images are captured and a longer period of time over which the images are captured might not negatively affect the use of processing resources at the media output device 106 and/or the computing device 104 to an undesirable degree.

In some alternative implementations, at least a portion of the operations described herein as being performed by the computing device 104 can be performed by the media output device 106. For example, the media output device 106 can be a smart TV that includes software (e.g., a standalone application or software that is part of the operating system) configured to run in the background and capture images (e.g., when triggered by wireless signal from the remote control device 110, or without that trigger condition, as discussed above) while users are navigating menus, watching media, etc. For example, instead of detecting wireless signals from the remote control device 110 and using those signals as trigger conditions for capturing images, such software can be configured to receive, from the operating system of the media output device 106, notifications (e.g., events) indicating which remote control commands (e.g., resulting from button pushes) have been received by the media output device 106, such as commands to open streaming applications, initiating playback of streaming media, pausing playback of streaming media, and/or other ones of the actions described above. In response to receiving such a notification, the media output device 106 can capture the images and either analyze them itself to determine the source information or other identifying information described above or send the images to a separate computing device (e.g., computing device 104) for that computing device to analyze. The media output device 106 and/or such a computing device can also be configured to transmit the determined source information or other identifying information to the server 112.

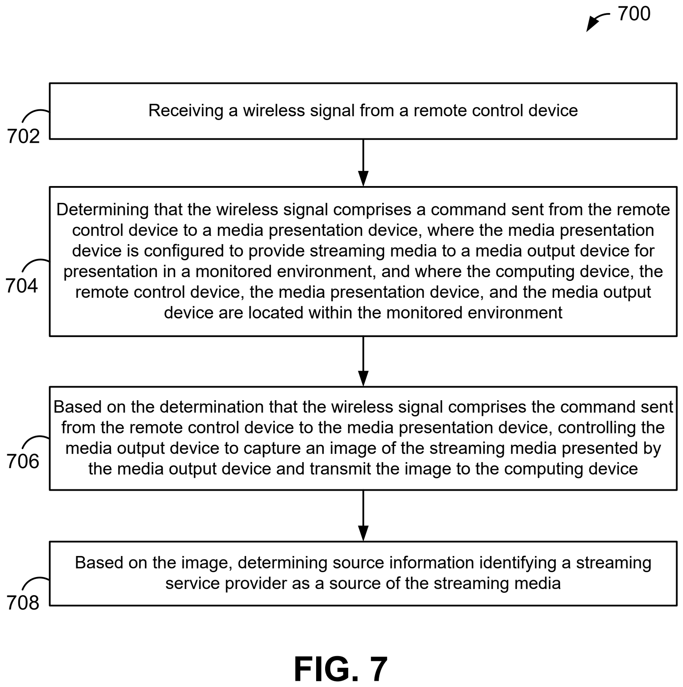

Figure 7 is a flow chart of an example method 700. Method 700 can be carried out by the computing device 104. At block 702, method 700 includes receiving a wireless signal from a remote control device. At block 704, method 700 includes determining that the wireless signal comprises a command sent from the remote control device to a media presentation device, where the media presentation device is configured to provide streaming media to a media output device for presentation in a monitored environment, and where the computing device, the remote control device, the media presentation device, and the media output device are located within the monitored environment. At block 706, method 700 includes based on the determination that the wireless signal comprises the command sent from the remote control device to the media presentation device, controlling the media output device to capture an image of the streaming media presented by the media output device and transmit the image to the computing device. And at block 708, method 700 includes based on the image, determining source information identifying a streaming service provider as a source of the streaming media.

In some examples, method 700 also includes transmitting the source information over a network to a server located remotely from the monitored environment.

In some examples, the act of determining that the wireless signal comprises the command sent from the remote control device to the media presentation device involves detecting a code within the wireless signal; comparing the code to at least one of a plurality of predefined codes, where each predefined code corresponds to a respective one of a plurality of media presentation devices, where the plurality of media presentation devices includes the media presentation device; determining that the code matches a predefined code corresponding to the media presentation device; and based on the determination that the code matches the predefined code corresponding to the media presentation device, determining that the wireless signal comprises the command sent from the remote control device to the media presentation device.

In some examples, method 700 also includes pairing the computing device with the media output device. In such examples, controlling the media output device to capture the image of the streaming media presented by the media output device and transmit the image to the computing device is further based on the pairing and involves wirelessly transmitting a command that, upon receipt by the media output device, causes the media output device to capture the image of the streaming media presented by the media output device and transmit the image to the computing device.

In some examples, the act of determining the source information identifying the streaming service provider as the source of the streaming media based on the image involves detecting, within the image, a logo of the streaming service provider.

In some examples, the act of determining the source information identifying the streaming service provider as the source of the streaming media based on the image involves detecting, within the image, a user interface layout of the streaming service provider.

In some examples, the computing device and the media output device are connected to a local area network of the monitored environment.

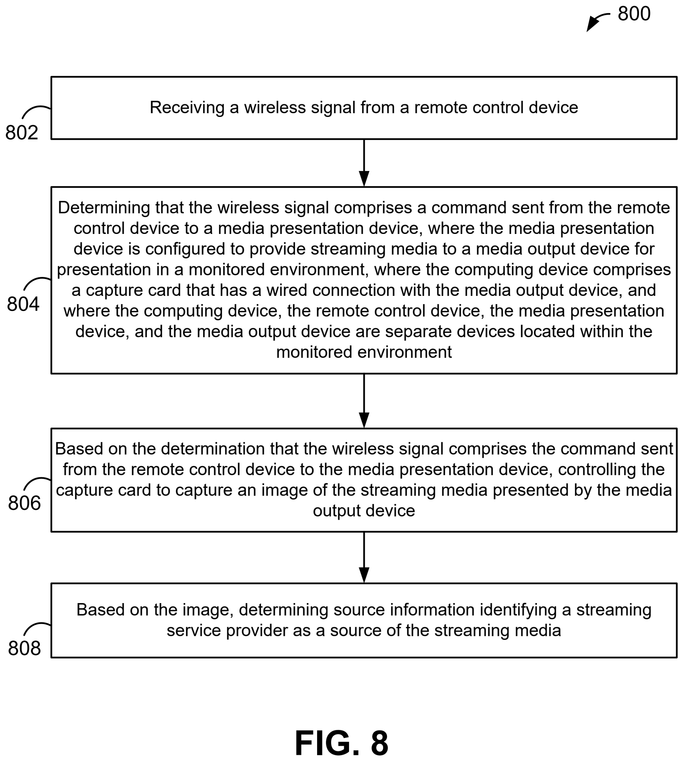

Figure 8 is a flow chart of an example method 800. Method 800 can be carried out by the computing device 104. At block 802, method 800 includes receiving a wireless signal from a remote control device. At block 804, method 800 includes determining that the wireless signal comprises a command sent from the remote control device to a media presentation device, where the media presentation device is configured to provide streaming media to a media output device for presentation in a monitored environment, where the computing device comprises a capture card that has a wired connection with the media output device, and where the computing device, the remote control device, the media presentation device, and the media output device are separate devices located within the monitored environment. At block 806, method 800 includes based on the determination that the wireless signal comprises the command sent from the remote control device to the media presentation device, controlling the capture card to capture an image of the streaming media presented by the media output device. And at block 808, method 800 includes based on the image, determining source information identifying a streaming service provider as a source of the streaming media.

In some examples, the media presentation device is connected to the media output device and the capture card via a splitter device.

In some examples, the capture card is connected to an input port of the computing device.

In some examples, the capture card is integrated within the computing device.

In some examples, method 800 also includes transmitting the source information over a network to a server located remotely from the monitored environment.

In some examples, the act of determining that the wireless signal comprises the command sent from the remote control device to the media presentation device involves detecting a code within the wireless signal; comparing the code to at least one of a plurality of predefined codes, where each predefined code corresponds to a respective one of a plurality of media presentation devices, where the plurality of media presentation devices includes the media presentation device; determining that the code matches a predefined code corresponding to the media presentation device; and based on the determination that the code matches the predefined code corresponding to the media presentation device, determining that the wireless signal comprises the command sent from the remote control device to the media presentation device.

In some examples, the act of determining the source information identifying the streaming service provider as the source of the streaming media based on the image involves detecting, within the image, a logo of the streaming service provider.

In some examples, the act of determining the source information identifying the streaming service provider as the source of the streaming media based on the image involves detecting, within the image, a user interface layout of the streaming service provider.

In some examples, the computing device and the media output device are connected to a local area network of the monitored environment.

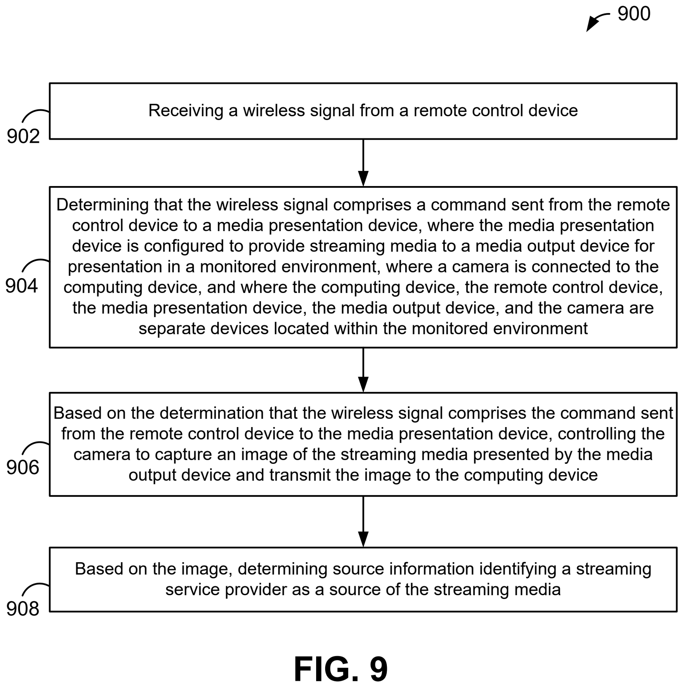

Figure 9 is a flow chart of an example method 900. Method 900 can be carried out by the computing device 104. At block 902, method 900 includes receiving a wireless signal from a remote control device. At block 904, method 900 includes determining that the wireless signal comprises a command sent from the remote control device to a media presentation device, where the media presentation device is configured to provide streaming media to a media output device for presentation in a monitored environment, where a camera is connected to the computing device, and where the computing device, the remote control device, the media presentation device, the media output device, and the camera are separate devices located within the monitored environment. At block 906, method 900 includes based on the determination that the wireless signal comprises the command sent from the remote control device to the media presentation device, controlling the camera to capture an image of the streaming media presented by the media output device and transmit the image to the computing device. And at block 908, method 900 includes based on the image, determining source information that identifies a streaming service provider as a source of the streaming media.

In some examples, the camera is mounted on top of the media output device. In other examples, the camera is mounted at a location within the monitored environment that is in front of the media output device and located remotely from the media output device.

In some examples, the act of controlling the camera to capture the image of the streaming media presented by the media output device and transmit the image to the computing device involves transmitting a command that, upon receipt by the camera, causes the camera to capture the image of the streaming media presented by the media output device and transmit the image to the computing device.

In some examples, method 900 also includes transmitting the source information over a network to a server located remotely from the monitored environment.

In some examples, the act of determining that the wireless signal comprises the command sent from the remote control device to the media presentation device involves detecting a code within the wireless signal; comparing the code to at least one of a plurality of predefined codes, where each predefined code corresponds to a respective one of a plurality of media presentation devices, where the plurality of media presentation devices includes the media presentation device; determining that the code matches a predefined code corresponding to the media presentation device; and based on the determination that the code matches the predefined code corresponding to the media presentation device, determining that the wireless signal comprises the command sent from the remote control device to the media presentation device.

In some examples, the act of determining the source information identifying the streaming service provider as the source of the streaming media based on the image involves detecting, within the image, a logo of the streaming service provider.

In some examples, the act of determining the source information identifying the streaming service provider as the source of the streaming media based on the image involves detecting, within the image, a user interface layout of the streaming service provider.

### IV. Example Computing Device

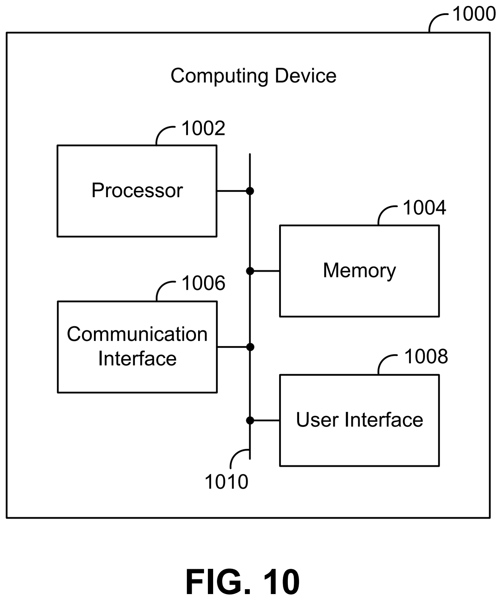

Figure 10 is a simplified block diagram of an example computing device 1000. The computing device 1000 can be configured to perform one or more operations, such as the operations described in this disclosure. As shown, the computing device 1000 can include various components, such as a processor 1002, memory 1004, a communication interface 1006, and/or a user interface 1008. These components can be connected to each other (or to another device, system, or other entity) via a connection mechanism 1010. Any one or more of the components shown in Figure 1 and Figure 2, such as the computing device 104, the media output device 106, the media presentation device 108, and/or the server 112, can take the form of the computing device 1000 shown and described with respect to Figure 10, or a computing system that includes one or more such computing devices.

The processor 1002 can include one or more general-purpose processors and/or one or more special-purpose processors.

Memory 1004 can include one or more volatile, non-volatile, removable, and/or non-removable storage components, such as magnetic, optical, or flash storage, and/or can be integrated in whole or in part with the processor 1002. Further, memory 1004 can take the form of a non-transitory computer-readable storage medium, having stored thereon computer-readable program instructions (e.g., compiled or non-compiled program logic and/or machine code) that, upon execution by the processor 1002, cause the computing device 1000 to perform one or more operations, such as those described in this disclosure. The program instructions can define and/or be part of a discrete software application. In some examples, the computing device 1000 can execute the program instructions in response to receiving an input (e.g., via the communication interface 1006 and/or the user interface 1008). Memory 1004 can also store other types of data, such as those types described in this disclosure. In some examples, memory 1004 can be implemented using a single physical device, while in other examples, memory 1004 can be implemented using two or more physical devices.

The communication interface 1006 can include one or more wired interfaces (e.g., an Ethernet interface) or one or more wireless interfaces (e.g., a cellular interface, Wi-Fi interface, or Bluetooth^{®} interface). Such interfaces allow the computing device 1000 to connect with and/or communicate with another computing device, or a camera located remotely from the computing device 1000, over a computer network (e.g., a home Wi-Fi network, cloud network, or the Internet) and using one or more communication protocols. Any such connection can be a direct connection or an indirect connection, the latter being a connection that passes through and/or traverses one or more entities, such as a router, switcher, server, or other network device. Likewise, in this disclosure, a transmission of data from one computing device to another can be a direct transmission or an indirect transmission.

The user interface 1008 can facilitate interaction between computing device 1000 and a user of computing device 1000, if applicable. As such, the user interface 1008 can include input components such as a keyboard, a keypad, a mouse, a touch-sensitive panel, a microphone, and/or a camera, and/or output components such as a display device (which, for example, can be combined with a touch-sensitive panel), a sound speaker, and/or a haptic feedback system. More generally, the user interface 1008 can include hardware and/or software components that facilitate interaction between the computing device 1000 and the user of the computing device 1000.

The connection mechanism 1010 can be a cable, system bus, computer network connection, or other form of a wired or wireless connection between components of the computing device 1000.

Although not explicitly shown in Figure 10, the computing device 1000 can also include a signal detector and/or capture card, as described above with respect to Figure 1 and Figure 2.

One or more of the components of the computing device 1000 can be implemented using hardware (e.g., a digital signal processor (DSP), an application-specific integrated circuit (ASIC), a field-programmable gate array (FPGA), another programmable logic device, or discrete gate or transistor logic), software executed by one or more processors, firmware, or any combination thereof. Moreover, any two or more of the components of the computing device 1000 can be combined into a single component, and the function described herein for a single component can be subdivided among multiple components.

### V. Example Variations

Although the examples and features described above have been described in connection with specific entities and specific operations, in some scenarios, there can be many instances of these entities and many instances of these operations being performed, perhaps contemporaneously or simultaneously, on a large-scale basis.

In addition, although some of the operations described in this disclosure have been described as being performed by a particular entity, the operations can be performed by any entity, such as the other entities described in this disclosure. Further, although the operations have been recited in a particular order and/or in connection with example temporal language, the operations need not be performed in the order recited and need not be performed in accordance with any particular temporal restrictions. However, in some instances, it can be desired to perform one or more of the operations in the order recited, in another order, and/or in a manner where at least some of the operations are performed contemporaneously/simultaneously. Likewise, in some instances, it can be desired to perform one or more of the operations in accordance with one more or the recited temporal restrictions or with other timing restrictions. Further, each of the described operations can be performed responsive to performance of one or more of the other described operations. Also, not all of the operations need to be performed to achieve one or more of the benefits provided by the disclosure, and therefore not all of the operations are required.

Although certain variations have been described in connection with one or more examples of this disclosure, these variations can also be applied to some or all of the other examples of this disclosure as well and therefore aspects of this disclosure can be combined and/or arranged in many ways. The examples described in this disclosure were selected at least in part because they help explain the practical application of the various described features.

Also, although select examples of this disclosure have been described, alterations and permutations of these examples will be apparent to those of ordinary skill in the art. Other changes, substitutions, and/or alterations are also possible without departing from the invention in its broader aspects as set forth in the following claims.

The specification includes the following subject-matter expressed in the form of clauses 1-20.
1. A non-transitory computer-readable storage medium, having stored thereon program instructions that, when executed by a processor of a computing device, cause performance of operations comprising:
   receiving a wireless signal from a remote control device;
   determining that the wireless signal comprises a command sent from the remote control device to a media presentation device, wherein the media presentation device is configured to provide streaming media to a media output device for presentation in a monitored environment, and wherein the computing device, the remote control device, the media presentation device, and the media output device are located within the monitored environment;
   based on the determination that the wireless signal comprises the command sent from the remote control device to the media presentation device, controlling the media output device to capture an image of the streaming media presented by the media output device and transmit the image to the computing device; and
   based on the image, determining source information identifying a streaming service provider as a source of the streaming media.
2. The non-transitory computer-readable storage medium of clause 1, the operations further comprising:
   transmitting the source information over a network to a server located remotely from the monitored environment.
3. The non-transitory computer-readable storage medium of clause 1, wherein determining that the wireless signal comprises the command sent from the remote control device to the media presentation device comprises:
   detecting a code within the wireless signal;
   comparing the code to at least one of a plurality of predefined codes, wherein each predefined code corresponds to a respective one of a plurality of media presentation devices, wherein the plurality of media presentation devices includes the media presentation device;
   determining that the code matches a predefined code corresponding to the media presentation device; and
   based on the determination that the code matches the predefined code corresponding to the media presentation device, determining that the wireless signal comprises the command sent from the remote control device to the media presentation device.
4. The non-transitory computer-readable storage medium of clause 1, the operations further comprising:
   pairing the computing device with the media output device,
   wherein controlling the media output device to capture the image of the streaming media presented by the media output device and transmit the image to the computing device is further based on the pairing and comprises wirelessly transmitting a command that, upon receipt by the media output device, causes the media output device to capture the image of the streaming media presented by the media output device and transmit the image to the computing device.
5. The non-transitory computer-readable storage medium of clause 1, wherein determining the source information identifying the streaming service provider as the source of the streaming media based on the image comprises detecting, within the image, a logo of the streaming service provider.
6. The non-transitory computer-readable storage medium of clause 1, wherein determining the source information identifying the streaming service provider as the source of the streaming media based on the image comprises detecting, within the image, a user interface layout of the streaming service provider.
7. The non-transitory computer-readable storage medium of clause 1, wherein the computing device and the media output device are connected to a local area network of the monitored environment.
8. A method performed by a computing device comprising a processor and memory, the method comprising:
   receiving a wireless signal from a remote control device;
   determining that the wireless signal comprises a command sent from the remote control device to a media presentation device, wherein the media presentation device is configured to provide streaming media to a media output device for presentation in a monitored environment, and wherein the computing device, the remote control device, the media presentation device, and the media output device are located within the monitored environment;
   based on the determination that the wireless signal comprises the command sent from the remote control device to the media presentation device, controlling the media output device to capture an image of the streaming media presented by the media output device and transmit the image to the computing device; and
   based on the image, determining source information identifying a streaming service provider as a source of the streaming media.
9. The method of clause 8, further comprising:
   transmitting the source information over a network to a server located remotely from the monitored environment.
10. The method of clause 8, wherein determining that the wireless signal comprises the command sent from the remote control device to the media presentation device comprises:
   detecting a code within the wireless signal;
   comparing the code to at least one of a plurality of predefined codes, wherein each predefined code corresponds to a respective one of a plurality of media presentation devices, wherein the plurality of media presentation devices includes the media presentation device;
   determining that the code matches a predefined code corresponding to the media presentation device; and
   based on the determination that the code matches the predefined code corresponding to the media presentation device, determining that the wireless signal comprises the command sent from the remote control device to the media presentation device.
11. The method of clause 8, further comprising:
   pairing the computing device with the media output device,
   wherein controlling the media output device to capture the image of the streaming media presented by the media output device and transmit the image to the computing device is further based on the pairing and comprises wirelessly transmitting a command that, upon receipt by the media output device, causes the media output device to capture the image of the streaming media presented by the media output device and transmit the image to the computing device.
12. The method of clause 8, wherein determining the source information identifying the streaming service provider as the source of the streaming media based on the image comprises detecting, within the image, a logo of the streaming service provider.
13. The method of clause 8, wherein determining the source information identifying the streaming service provider as the source of the streaming media based on the image comprises detecting, within the image, a user interface layout of the streaming service provider.
14. The method of clause 8, wherein the computing device and the media output device are connected to a local area network of the monitored environment.
15. A computing device comprising:
   a processor; and
   memory having stored thereon program instructions that, when executed by the processor, cause performance of operations comprising:
      receiving a wireless signal from a remote control device;
      determining that the wireless signal comprises a command sent from the remote control device to a media presentation device, wherein the media presentation device is configured to provide streaming media to a media output device for presentation in a monitored environment, and wherein the computing device, the remote control device, the media presentation device, and the media output device are located within the monitored environment;
      based on the determination that the wireless signal comprises the command sent from the remote control device to the media presentation device, controlling the media output device to capture an image of the streaming media presented by the media output device and transmit the image to the computing device; and
      based on the image, determining source information identifying a streaming service provider as a source of the streaming media.
16. The computing device of clause 15, the operations further comprising:
   transmitting the source information over a network to a server located remotely from the monitored environment.
17. The computing device of clause 15, wherein determining that the wireless signal comprises the command sent from the remote control device to the media presentation device comprises:
   detecting a code within the wireless signal;
   comparing the code to at least one of a plurality of predefined codes, wherein each predefined code corresponds to a respective one of a plurality of media presentation devices, wherein the plurality of media presentation devices includes the media presentation device;
   determining that the code matches a predefined code corresponding to the media presentation device; and
   based on the determination that the code matches the predefined code corresponding to the media presentation device, determining that the wireless signal comprises the command sent from the remote control device to the media presentation device.
18. The computing device of clause 15, the operations further comprising:
   pairing the computing device with the media output device,
   wherein controlling the media output device to capture the image of the streaming media presented by the media output device and transmit the image to the computing device is further based on the pairing and comprises wirelessly transmitting a command that, upon receipt by the media output device, causes the media output device to capture the image of the streaming media presented by the media output device and transmit the image to the computing device.
19. The computing device of clause 15, wherein determining the source information identifying the streaming service provider as the source of the streaming media based on the image comprises detecting, within the image, a logo of the streaming service provider.
20. The computing device of clause 15, wherein determining the source information identifying the streaming service provider as the source of the streaming media based on the image comprises detecting, within the image, a user interface layout of the streaming service provider.

## Claims

1. A non-transitory computer-readable storage medium, having stored thereon program instructions that, when executed by a processor of a computing device, cause performance of operations comprising:
receiving a wireless signal from a remote control device;
determining that the wireless signal comprises a command sent from the remote control device to a media presentation device, wherein the media presentation device is configured to provide streaming media to a media output device for presentation in a monitored environment, and wherein the computing device, the remote control device, the media presentation device, and the media output device are located within the monitored environment;
based on the determination that the wireless signal comprises the command sent from the remote control device to the media presentation device, controlling the media output device to capture an image of the streaming media presented by the media output device and transmit the image to the computing device; and
based on the image, determining source information identifying a streaming service provider as a source of the streaming media.

2. The non-transitory computer-readable storage medium of claim 1, the operations further comprising:
transmitting the source information over a network to a server located remotely from the monitored environment.

3. The non-transitory computer-readable storage medium of claim 1 or 2, wherein determining that the wireless signal comprises the command sent from the remote control device to the media presentation device comprises:
detecting a code within the wireless signal;
comparing the code to at least one of a plurality of predefined codes, wherein each predefined code corresponds to a respective one of a plurality of media presentation devices, wherein the plurality of media presentation devices includes the media presentation device;
determining that the code matches a predefined code corresponding to the media presentation device; and
based on the determination that the code matches the predefined code corresponding to the media presentation device, determining that the wireless signal comprises the command sent from the remote control device to the media presentation device.

4. The non-transitory computer-readable storage medium of any of claims 1-3, the operations further comprising:
pairing the computing device with the media output device,
wherein controlling the media output device to capture the image of the streaming media presented by the media output device and transmit the image to the computing device is further based on the pairing and comprises wirelessly transmitting a command that, upon receipt by the media output device, causes the media output device to capture the image of the streaming media presented by the media output device and transmit the image to the computing device.

5. The non-transitory computer-readable storage medium of any of claims 1-4, wherein determining the source information identifying the streaming service provider as the source of the streaming media based on the image comprises detecting, within the image, a logo of the streaming service provider.

6. The non-transitory computer-readable storage medium of any of claims 1-5, wherein determining the source information identifying the streaming service provider as the source of the streaming media based on the image comprises detecting, within the image, a user interface layout of the streaming service provider.

7. The non-transitory computer-readable storage medium of any of claims 1-6, wherein the computing device and the media output device are connected to a local area network of the monitored environment.

8. A method performed by a computing device comprising a processor and memory, the method comprising:
receiving a wireless signal from a remote control device;
determining that the wireless signal comprises a command sent from the remote control device to a media presentation device, wherein the media presentation device is configured to provide streaming media to a media output device for presentation in a monitored environment, and wherein the computing device, the remote control device, the media presentation device, and the media output device are located within the monitored environment;
based on the determination that the wireless signal comprises the command sent from the remote control device to the media presentation device, controlling the media output device to capture an image of the streaming media presented by the media output device and transmit the image to the computing device; and
based on the image, determining source information identifying a streaming service provider as a source of the streaming media.

9. The method of claim 8, further comprising:
transmitting the source information over a network to a server located remotely from the monitored environment.

10. The method of claim 8 or 9, wherein determining that the wireless signal comprises the command sent from the remote control device to the media presentation device comprises:
detecting a code within the wireless signal;
comparing the code to at least one of a plurality of predefined codes, wherein each predefined code corresponds to a respective one of a plurality of media presentation devices, wherein the plurality of media presentation devices includes the media presentation device;
determining that the code matches a predefined code corresponding to the media presentation device; and
based on the determination that the code matches the predefined code corresponding to the media presentation device, determining that the wireless signal comprises the command sent from the remote control device to the media presentation device.

11. The method of any of claims 8-10, further comprising:
pairing the computing device with the media output device,
wherein controlling the media output device to capture the image of the streaming media presented by the media output device and transmit the image to the computing device is further based on the pairing and comprises wirelessly transmitting a command that, upon receipt by the media output device, causes the media output device to capture the image of the streaming media presented by the media output device and transmit the image to the computing device.

12. The method of any of claims 8-11, wherein determining the source information identifying the streaming service provider as the source of the streaming media based on the image comprises detecting, within the image, a logo of the streaming service provider.

13. The method of any of claims 8-12, wherein determining the source information identifying the streaming service provider as the source of the streaming media based on the image comprises detecting, within the image, a user interface layout of the streaming service provider.

14. The method of any of claims 8-13, wherein the computing device and the media output device are connected to a local area network of the monitored environment.

15. A computing device comprising:
a processor; and
memory having stored thereon program instructions that, when executed by the processor, cause performance of operations comprising the method of any of claims 8-14.
